# EUROPEAN PATENT SPECIFICATION

(11) **EP 1 804 523 B1**
(45) Date of publication and mention of the grant of the patent: **25.04.2012**
(21) Application number: 05028633.5
(22) Date of filing: 29.12.2005
(51) Int. Cl.: H04Q 1/14

(54) **A telecommunications module and an assembly including at least one telecommunications module**
Telekommunikationsmodul und Telekommunikationsanordnung mit mindestens einem Telekommunikationsmodul
Module de télécommunication et assemblage comprenant au moins un module de télécommunication

(43) Date of publication of application: 04.07.2007
(73) Proprietor: 3M Innovative Properties Company, St. Paul, MN 55133-3427 (US)
(72) Inventor: Bonvallat, Pierre, 74300 Cluses (FR); Metral, Guy, 74300 Cluses (FR); Perrier, Gaetan, 74300 Cluses (FR)
(74) Representative: Bergen, Katja

(56) References cited:
- FR-A- 2 863 409
- US-A1- 2005 141 695

## Description

### Technical Field

The invention relates to a telecommunications module and an assembly including at least one telecommunications module.

### Background

In the telecommunications field numerous customers are connected by the switch of a telecommunications company via telecommunications lines. Customers are also sometimes referred to as subscribers. The switch is also often called an exchange or "PBX" (a central office exchange operated by the telecommunications company). Between the subscriber and the switch sections of telecommunications lines are connected with telecommunications modules. Telecommunications modules establish an electrical connection between one wire attached to the telecommunications module at a first side and another wire attached to the telecommunications module at a second side. The wires of one side can also be called incoming wires and the wires of the other side can be called outgoing wires. Plural telecommunications modules can be put together at a distribution point, such as a main distribution frame, an intermediate distribution frame, an outside cabinet or a distribution point located, for example, in an office building or on a particular floor of an office building. To allow flexibility in wiring some telecommunications lines are connected with first telecommunications modules in a manner to constitute a permanent connection. Flexibility is realized by so-called jumpers or cross connects, which flexibly connect contacts of the first telecommunications module with contacts of a second telecommunications module. These jumpers can be changed when, for example, a person moves within an office building to provide a different telephone (i.e., a different telephone line) with a telephone number the relocated person intends to keep. In the telecommunications module disconnection points can be located in the electrical connection between the two sides. At such disconnection points, disconnection plugs can be inserted to disconnect the line. Protection plugs or magazines may also be connected to the module to protect equipment from overcurrent and overvoltage. Moreover, test plugs can be inserted at a disconnection point in order to test or monitor a line.

Recently, Asymmetric Digital Subscriber Line (or "ADSL") technology has spread widely in the field of telecommunications. This technology allows at least two different signals to be transmitted on a single line and is achieved by transmitting the different signals at different frequencies along the same line. Signals are combined at a particular point in the telecommunications line and split at another point. In particular, at the subscriber side separate voice and data signals are combined and sent to the central office over the same line. In the central office the combined signal is split. For the transmission of voice and data signals to the subscriber, separate voice and data signals are combined at the central office, sent to the subscriber and split at the subscriber side. After splitting the signal, the so-called "plain old telephone service" (or "POTS") can be used to transmit voice signals. The remaining part of the split signal can be used to transmit data or other information. Splitters, which are used to split or combine the signal, can generally be arranged at any distribution point. In this context, a POTS wire or POTS jumper would indicate a wire that is connected with an exchange of the telecommunications company. A line connection would indicate a wire that leads to the subscriber or customer, and, as discussed in more detail below, a DSLAM-wire would indicate a wire that is connected with a DSLAM and thus can, for example, transmit data. A DSLAM (Digital Subscriber Line Access Multiplexer) processes the data signal.

Any electronic components necessary to perform the above functions can be contained together with a printed circuit board as a base in a functional plug, which can be called a splitter module. Other similar functional plugs include protection modules, which contain one or more components that protect against overvoltage and/or overcurrent and testing and monitoring modules, which contain suitable electronic components and circuits to test and/or monitor a telecommunications line. Still other functional plugs are known to those skilled in the art. These functional plugs can be inserted into a receiving space of the telecommunications module. In particular, one or more contacts of the functional plug can establish electrical contact with one or more contacts of the telecommunications module. In a state when a functional plug is not inserted opposing contacts can be in electrical contact with each other at a disconnection point. The contacts can be separated by inserting a functional plug where electrical contact between the separated contacts of the telecommunications module and the contacts of the functional plug can be established.

Published Japanese patent application JP 2002-232922 A describes a telecommunications module in which contacts adapted to connect with ADSL-wires as well as contacts adapted to connect with voice-wires are provided at a front side. Contacts adapted to connect with data wires are located at a rear side opposite the front side. Splitters are insertable from the rear side.

FR 2 863 409 discloses a telecommunications module with contacts. The contacts are arranged in two rows. The contacts of the first row are in contact with the contacts of the second row inside of the telecommunications module.

### Summary of the Invention

In one aspect, present invention provides a telecommunications module with improved versatility. In another aspect, the invention provides an assembly including at least one such telecommunications module.

The telecommunications modules for a distribution frame generally described herein have at least two sides and a first group of contacts adapted to connect with POTS wires, a second group of contacts adapted to connect with line wires and a third group of contacts adapted to contact with DSLAM wires. The first group of contacts and the second group of contacts are provided on opposite sides of the telecommunications module, and at least some contacts of the first group are in contact with at least some contacts of the second group at disconnection points. Furthermore the first group of contacts is provided on a front side, the second group of contacts is provided on a rear side opposite the front side and the third group of contacts is provided on a front side or on a rear side.

The assemblies described herein include at least one such telecommunications module and at least one outside module.

### Brief Description of the Drawings

The invention will be described hereinafter in part by reference to non-limiting examples thereof and with reference to the drawings, in which:
FIG. 1 shows a sectional side view of an assembly including a telecommunications module and an outside module in a partially inserted state;
FIG 2 shows a sectional side view of a second embodiment of an assembly in a first position of an outside module;
FIG. 3 shows a sectional side view of the assembly of FIG. 2 in a second position of the outside module;
FIG. 4 shows a sectional side view of a third embodiment of an assembly;
FIG. 5 shows a sectional side view of a fourth embodiment of an assembly; and
FIG. 6 shows a sectional side view of a fifth embodiment of an assembly.

### Detail Description of Preferred Embodiments

The telecommunications modules of the invention include at least two sides, and can also include a housing. The housing can be made of plastic or any other suitable material and can be constituted by one or more components. The housing serves to accommodate the contacts of the telecommunications module. The housing may also have specific structures for positioning the contacts. The housing can, moreover, comprise one or more cavities or receiving spaces adapted to accommodate objects such as outside modules or plugs or parts thereof. The housing can also comprise suitable structures, typically at or near the outside, to enable the telecommunications module to be mounted to a rack or any other suitable carrier or to hold or secure objects listed above. The telecommunications modules generally have a front and a rear side. Usually contacts such as described above will be exposed at the front and/or rear side to allow for connection of wires. Outside modules can be insertable at the front side and/or from a rear side opposite the front side.

The telecommunications modules further include three groups of contacts, a first group of contacts are adapted to connect with POTS wires, a second group of contacts are adapted to connect with line wires, and a third group of contacts are adapted to connect with DSLAM (Digital Subscriber Line Access Multiplexer) wires. A contact, as used herein, will generally refer to any component adapted to establish electrical connection with at least one outside wire. For this purpose the contact can be formed, for example, as an Insulation Displacement Contact ("IDC"), a wire wrap contact or in any other suitable manner. The contacts can each have a first end adapted to connect with a wire. They can also have a second end at which they are in disconnectable contact with each other. This connection can also be formed along the contacts. The point where the contacts are in disconnectable contact with each other is referred to as a disconnection point. At the disconnection point an electrical connection with a further component can be established. This can, for example, be the outside contact of an outside module such as splitter module. In this case the signal transmitted from the wire to the first contact is further transmitted to the electronic components of the splitter module and processed. A second contact can also, for example, be connected with the splitter module so that the signal that is processed, split or combined by the splitter module is transmitted via the second contact to a wire connected with the second contact. The first and/or second contact can at least be partially located outside a housing of the telecommunications module.

In this context, as indicated above in connection with ADSL technology, line wires are wires which are directly or indirectly connected with a customer or subscriber and transmit a combined signal. The combined signal is split into a POTS signal, a voice signal, and a data signal that is transmitted to a DSLAM which processes the data signal. When a combined signal is to be sent to a subscriber, the voice signal from a POTS wire and the data signal from a DSLAM wire are combined and transmitted to a line wire via those contacts to which line wires are connected. Thus, the contacts do not differ structurally from each other whether they are connected with POTS, line or DSLAM wires. However, in distribution points, as described above, an efficient organization of the wires is achieved when groups of contacts to which POTS, line and DSLAM wires, respectively, are connected are grouped together. For example, the group of POTS contacts can be arranged in a first row, the group of the line contacts can be arranged in a second row, and the group of DSLAM contacts can be arranged in a third row.

In the telecommunications module described herein, the first group of contacts (i.e., the POTS contacts) and the second group of contacts (i.e., the line contacts) are provided on different sides of the telecommunications module. In particular, those contacts at which connected wires require less frequent change can be at a side other than the front side, for example, at a rear side. This is according to the invention the case for line wires. Consequently, POTS and DSLAM wires can be connected with contacts at a front side to facilitate any changes of these connections which may be necessary.

In the telecommunications module described herein, at least some POTS contacts are in contact with at least some line contacts at disconnection points. Thus, contacts provided on different sides (for example a front side on the one hand, and a rear side on the other hand) are in contact with each other. This advantageously provides lifeline service, when there is no connection with the third group of contacts (i.e. the DSLAM contacts). Such a connection with DSLAM contacts can, for example, be established by combining an outside module, such as a splitter module, with the telecommunications module to provide ADSL services. However, when such a connection is not provided for whatever reason, the voice signal can still be transmitted from the line contacts to the POTS contacts since contacts are in contact with each other at disconnection points. To provide ADSL services, the disconnection point can be utilized to insert at least a portion of a splitter module to appropriately process the signals.

The above-described lifeline service can be provided in a telecommunications module requiring little space. This is achieved by using different sides for exposing contacts in order to allow a connection with wires. This provides a versatile and efficient telecommunications module which at the same time enables establishing the required connections in a distribution point with high density.

The disconnection point at which at least some contacts of the first group are in contact with at least some contacts of the second group can generally be formed by portions of the mentioned contacts, such as spring tabs, which are in disconnectable contact with each other. By inserting a portion of an outside module between those portions which are in contact at the disconnection points, the electrical contact can be disconnected and the signal can be guided to the circuits and/or electrical components provided in the outside module.

It is advantageous to provide the first group of contacts and the second group of contacts on opposite sides. The opposite sides are the front and the rear side. In this way, a right and a left side extending between the front and the rear side can be kept free of contacts and can be used to locate adjacent telecommunications modules in close proximity. It is noted that the right and left side, as additionally shown in the figures, may, in use, be a top and a bottom side respectively. Thus, a "stack" of telecommunications modules can be provided and a high density of connections in a distribution point can be achieved. At the same time, the front and rear sides where contacts are exposed are accessible for changing the connections and/or adding outside modules as well as performing similar operations.

The POTS contacts provide advantages when they are provided on a front side and the line contacts are provided on a rear side opposite the front side. Because line wires need to be changed less frequently than POTS wires, it is advantageous when the POTS contacts are provided on a front side.

The DSLAM contacts can be provided on either the front or the rear side of the telecommunications module. Since it is generally advantageous to provide as many contacts as possible on the front side of the telecommunications module, the DSLAM contacts are preferably oriented on the front side.

The telecommunications module can also include display devices. As will be described in more detail below, one or more outside modules can be combined with the telecommunications module and can have protection components, such as overvoltage and/or overcurrent protectors. A fail safe device can be provided which is activated when an overcurrent is present for a predetermined period of time. Any of the above-mentioned protection components can be electrically connected with a display device of the telecommunications module to provide an indication that one or more of the protection components have been activated.

It is advantageous when the telecommunications module has a suitable connector integrated therewith, that connects with the display device. Thus, a signal to activate the display device, based on an activated state of a protection component, can be efficiently transmitted to the display device.

In another aspect the invention provides an assemblies including at least one telecommunications module and at least one outside module.

The outside module can be at least partially insertable into the disconnection points in at least a first position. Thus, the disconnection points are used to guide the signal from a first contact (e.g. a line contact) through the outside module such as a splitter module to the POTS and DSLAM contacts. The outside module can also be a protection module without any splitter circuitry, so that the signal can be guided through the outside module to provide overcurrent protection. As a further alternative, the line contacts can merely be tapped to provide overvoltage protection while the signal is at the same time transmitted to a POTS contact to provide for example a lifeline service.

As will be apparent to those skilled in the art, ADSL services can be provided when the outside module is a splitter module having at least one splitter circuit.

The first inserted position of the outside module can be a position in which the outside module is additionally in contact with the third group of contacts, i.e., the DSLAM contacts. Thus, in the first position, ADSL services can be provided.

There can be a second position of the outside module in which there is no contact with the DSLAM contacts. Thus, the outside module can have distinct areas on those portions which are insertable at the disconnection points. In a first position, a first area might be inserted and might be connected with circuits and/or components in the outside module to provide connection with DSLAM contacts. In a second position, a second area might be connected with the contacts at disconnection points to provide lifeline services between the contacts as well as protection against overvoltage and/or overcurrent.

The internal structure of the outside module can include one or more printed circuit boards, and electronic components can be arranged on both sides of circuit boards allowing for efficient use of the available surfaces. In certain applications, the outside module can have two printed circuit boards. This also represents an efficient interior design of the outside module.

As already described, the outside module can have at least one protection component, such as an overcurrent or overvoltage protector, in order to provide required protection. When the outside module includes both protection components and splitter circuits, there are generally no additional outside modules required. Thus, the other sides including the front side of the telecommunications module can be kept free of such modules. For example, when the outside module is insertable from a rear side, the front side, where contacts are exposed, can be kept free of outside modules. This facilitates any handling and operations that might be required for the wires connected with the contacts. In some embodiments of the invention, a first outside module can comprise protection components or splitter circuits only and a second outside module including components lacking in the first outside module can be insertable into the telecommunications module from a different side than the first outside module.

It is also conceivable to use an outside module having only protection components for a first period of time. In such an arrangement, ADSL services are not provided. However, the lifeline service established via line and POTS contacts can be protected against overcurrent and/or overvoltage. At a later point in time, services provided for a particular subscriber may be upgraded or updated by replacing the outside module having only protection components by an outside module which additionally has splitter circuitry. With such an outside module and connections established to the DSLAM contacts, ADSL services can thereby additionally be provided.

It may prove advantageous when the protection components are arranged on a different side of the printed circuit board than the at least one splitter circuit. This keeps the outside module well organized and allows an efficient exchange of the electronic components as far as might be necessary. Protection components typically need to be changed more frequently, so it facilitates operations, when protection components are on a particular side of the printed circuit board.

It may also provide advantages when the protection components are arranged in at least one removable housing. In this case, the complete housing can be exchanged in case the protection components have been activated. This further facilitates the process of replacing the protection components.

In connection with protecting against overvoltage and/or overcurrent, the outside module can additionally have a fail safe device that can be activated when overcurrent occurs for a longer period of time. Particularly, the fail safe device can be connected, for example via a connector provided on the telecommunications module, with a display device of the telecommunications module. This can provide a signal for an operator indicating that the fail safe device has been activated.

The outside module can further have at least one test access contact. Those contacts of the outside module that are in contact with the contacts of the telecommunications module can be used to perform tests on the telecommunications module lines connected with the telecommunications contacts. Moreover, the outside module can have at least one switch to address a specific telecommunications line, on which tests are to be performed. Furthermore, the assembly of a telecommunications module and an outside module can further comprise a test bus and at least one test contact provided for example on the outside module in order to transmit a signal resulting from a test to a remote test device. Further details in this respect can be taken from the Applicant's co-pending application entitled "A Telecommunications Assembly including at least one Telecommunications Module, a Test Bus and a Kit of Parts" filed on the same day as the present application.

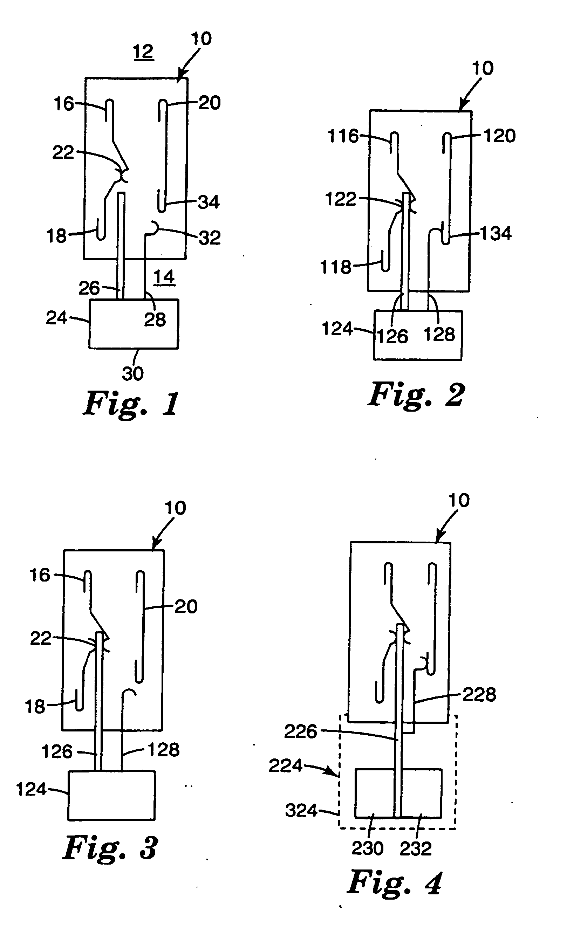

Referring to the drawings, FIG. 1 shows a schematic sectional side view of an assembly including a telecommunications module 10 and an outside module 24. In the embodiment shown, the telecommunications module 10 may extend perpendicular to the plane of the drawing of FIG. 1. Corresponding to this generally elongate shape, contacts 16, 18 and 20 can be arranged in rows generally extending perpendicular to the plane of the drawing of FIG. 1. In particular, contacts 16 can be referred to as POTS contacts as they are adapted to connect with POTS wires. Contacts 18 can be considered line contacts, as they are adapted to connect with line wires. Finally, contacts 20 can be referred to as DSLAM contacts as they adapted to connect with DSLAM wires. Contacts 16, 18 and 20 can be arranged in groups, for example, in rows which can be oriented as described above. POTS contacts 16 and DSLAM contacts 20 can be exposed at a front side 12 of the telecommunications module to allow connection with telecommunication lines, wires or jumpers. Line contacts 18 can be exposed at a rear side 14 of the telecommunications module 10. It will be understood that the contacts 16, 18 and 20 can be arranged differently. For example, line wire contacts 18 could be exposed at the front side, and POTS contacts 16 could be exposed at the rear side 14.

As schematically shown in FIG. 1, contacts 16, 18 and 20 include first ends, which are exposed at the front or rear side, respectively, to allow connection with wires. Contacts 16 and 18 further comprise a second end in the interior of the telecommunications module 10. The second end of both contacts 16, 18 shown in the drawing are in contact with each other at a disconnection point 22. The second ends can be formed by a bulge and/or as spring tab to establish an electrical connection, which can be separated, for example, by inserting a portion of the outside module 24, such as a printed circuit board 26, at the disconnection point 22. In FIG. 1 a state is shown where the outside module 24, particularly the printed circuit board 26, has not yet been inserted at the disconnection point 22.

The outside module 24 can also extend perpendicular to the plane of the drawing of FIG. 1, and there can be a row of outside contacts 28 and a elongate printed circuit board 26. In this case, the outside module 24 can be a multi-line module, i.e., a module which connects with plural telecommunication lines connected with a plurality of contacts 16, 18 and 20 of the telecommunications module 10. In another embodiment, the outside module 24 can be a single line module. In this case, the printed circuit board 26 can have an extension perpendicular to the plane of the drawing of FIG. 1, which corresponds to a pair of contacts 16, 18 and 20 each, as a pair of contacts is used to connect with wires of a telecommunications line constituted by a wire pair. Correspondingly, two outside contacts 28 will be present in such a single line module.

In the situation shown in FIG. 1, the outside module 24 is inactive. Line contacts 18 and POTS contacts 16 are in contact with one another at the disconnection points 22 to provide lifeline service, i.e., the transmission of voice signals only.

As regards the DSLAM contact 20, it also comprises a second end 34 located in the vicinity of the rear side 14 of the telecommunications module 10. This second end 34 of the DSLAM contact 20 is adapted to connect with outside contact 28 of the outside module 24. The outside module 24 can have a housing indicated by reference numeral 30 and the printed circuit board 26 and the outside contact 28 can project from the housing. In particular, the printed circuit board 26 and outside contact 28 can be insertable into the telecommunications module 10 at a rear side thereof. The outside contact 28 can have a bulge 32 and can, moreover, be flexible to establish a reliable electrical contact with the DSLAM contact 20 at the second end 34. As shown, the second end 34 can also be round and/or comprise a bulge.

With the described arrangement of contacts 16, 18 and 20, a demarcation is advantageously provided, as ADSL services involving the DSLAM might be provided by a company other than the company which provides POTS services. With the described structure of a telecommunications module, that part of the telecommunications module having the POTS and line contacts is "reserved" for a first company, and the other part of the telecommunications module having the DSLAM contacts is "reserved" for the telecommunications company providing ADSL services. In FIG. 1, the printed circuit board 26 and the outside contact 28 may be of the same approximate length, thus, when the outside module 24 is inserted into the telecommunications module 10, connection will be made to the POTS, line and DSLAM contacts (16, 18, 20).

FIG. 2 schematically shows a first inserted position of a second exemplary embodiment of an outside module 124. In this first position, the printed circuit board is inserted between POTS contact 16 and line contact 18 at the disconnection point 22. Outside contact 128 is moreover in contact with DSLAM contact 20 at the second end 34. In the position shown in FIG. 2, the signal transmitted via line contacts 18, i.e., a combined signal, can be processed in the outside module 124. For this purpose, the outside module 124 can have one or more splitter circuits (not shown). The signal can be transmitted from line contact 18 to the outside module 124 via conductors, which can be printed on the printed circuit board 126 on the side of the line contacts 18. The split signal can then be transmitted to the POTS contacts 16 and DSLAM contacts 20. The voice signal can be transmitted to the POTS contacts 16 via conductors, which can be imprinted on the printed circuit board 126 on the side of POTS contacts 16. The data signal can be transmitted to the DSLAM contacts 20 via the outside contacts 128.

Protection components can also be provided in the outside module. Since the signal is guided through the outside module 124 for splitting and/or combining, the signal (i.e. current) can also flow through an overcurrent protector, to provide overcurrent protection. As will be understood, overvoltage protection can also be provided by connecting at least one overvoltage protector with the circuit through which the signal is transmitted.

FIG. 3 schematically shows a second inserted position of the outside module 124. As can be taken from the drawing, the outside module 124 is displaced in a rearward direction as compared to the position shown in FIG. 2. In the second position shown in FIG. 3, the printed circuit board 26 is still inserted at the disconnection point 22. However, the outside contact 128 is not in contact with the DSLAM contact 20. In this position, ADSL services cannot be provided, as there is no connection with the DSLAM. However, by suitable circuits in the outside module 124, a connection between line contacts 18 and POTS contacts 16 can be provided to constitute a lifeline service, i.e., the transmission of voice signals. Moreover, by suitable conductors on the printed circuit board 126 and appropriate circuits in the outside module 124, overvoltage and/or overcurrent protection can be provided for those telecommunications lines connected with contacts 16, 18. This is beneficial as overcurrent and/or overvoltage typically occur on the side of the line contacts.

In the outside module 124 of FIGS. 2 and 3 a first and a second position can be realized. In particular, both the printed circuit board 126 and the outside contact 128 are active in the position shown in FIG. 2, whereas only the printed circuit board 126 is active in the position shown in FIG. 3. To accomplish this effect, the printed circuit board 126, or any alternative contact adapted to be inserted at connection point 22, can be longer as compared to a case (FIG. 1), in which it is desired to always establish a contact both at disconnection point 22 and at the second end 34 of DSLAM contact 20. Due to a longer extension of the printed circuit board 126, the latter will make contact at disconnection point 22 before the outside contact 128 establishes contact with DSLAM contact 20. Thus, the second position shown in FIG. 3 can be realized.

FIG. 4 shows a third exemplary embodiment of an outside module 224 which differs from the previous embodiments with regard to the arrangement of electrical components in the outside module 224. In this case, both splitter components and protection components are provided in separate housings 230, 232, respectively. It may be advantageous when protection components are arranged in one housing 230, and splitter components are arranged in the other housing 232. In this case, protection components, which may have to be exchanged more frequently than splitter components, can be exchanged by readily removing the complete housing 230. One or both housings 230, 232 may have accessible contacts for connection with complementary contacts provided in the outside module 224. For example, the complementary contacts can be present on the printed circuit board 226 of the outside module 224. These contacts can be formed as one or more holes or clamps, into which contacts, which may project from the housing 230, 232 can be inserted. As an alternative, one or more connectors can be provided on the housing 230, 232, and one or more complementary connectors can be provided in the outside module 224, for example, on the printed circuit board 226. Moreover, the outside contacts 228 (only one is shown in the drawing) may be connected with the printed circuit board 226 or either one of the housings 230, 232. Finally, the outside module 224 may have a holder or casing 334 enclosing one or both housings 230, 232 and at least a part of the printed circuit board 226 and/or outside contacts 228. The casing 234 may be attached to the printed circuit board 226 and may serve to protect the printed circuit board 226 and/or the outside contacts 228 so that they will not be damaged or affected, when the outside module 224 is inserted into telecommunications module 10. Moreover, one or both housings 230, 232 may be accessible through one or more openings (not shown) in the casing 234 so that they can be readily exchanged, when necessary.

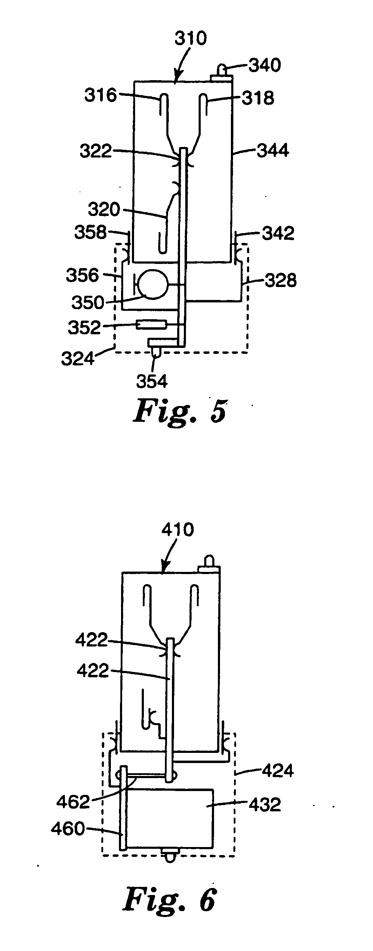

FIG. 5 schematically shows a telecommunications module 310 and an outside module 324 that do not fall under the scope of the present invention as claimed in claim 1 to 16 since POTS and line contacts both are provided on the front side. The telecommunications module 310 differs from the embodiments of Figs. 1 to 4 in that it has a display device 340. The display device can be an LCD display, a light or a lamp. The display device 340 can be used to indicate that at least one of the protection components in outside module 324 has been activated. For connection between the outside module 324 and the display device 340, a connector 342 can be provided on the module 310. The connector 342 can generally be in the form of a strip of sheet metal and can be arranged substantially parallel to a right surface 344 of the telecommunications module 310. In the case shown in FIG. 5, outside contact 328 of outside module 324 is used to establish a connection between the circuits in outside module 324, which can, for example, be provided on printed circuit board 326. The outside module can also include an overvoltage protector in the form of a gas discharge tube 350 which can have a fail-safe device. Moreover, an overcurrent protector, for example, in the form of a PTCR (Positive Temperature Coefficient Resistor) fuse or an appropriate thermistor can be present.

The outside module 324 can, as an alternative or addition to the display device 340 of the telecommunications module 310, include a display device 354. The outside module 324 can also have a ground contact 356 which is similar to the outside contact 328 and is, in the fitted state of the outside module 324 as shown in FIG. 5, in contact with a ground bar 358 of the telecommunications module 310. Such a ground bar is, for example, shown in the applicant's European patent application 05 017 054.7, which is, in this respect, incorporated herein by the reference. The ground bar 358 can extend along the telecommunications module 310, generally perpendicular to the plane of the drawing of FIG. 5. The ground bar 358 can (not shown) be in electrical contact with a further grounding element, such as a portion of a carrier (though not shown), to which plural telecommunications module 310 can be mounted. The telecommunications module 310 shown in FIG. 5 differs from the embodiments of Figs. 1 to 4 in that, in the inserted state of the outside module 324, DSLAM contacts 320 are in contact with printed circuit board 326 of the outside module 324. The positions of POTS contacts 316 correspond to those of Figs. 1 to 4. However, DSLAM contacts 320 and line contacts 318 have essentially changed their position as compared to Fig. 1 to 4. Thus, when the outside module 324 is removed, lifeline service can again be provided between line contacts 318 and POTS contacts 316 via disconnection point 322.

FIG. 6 shows a telecommunications module 410 and an outside module 424, that do not fall under the scope of the present invention as claimed in claim 1 to 16 since POTS and line contacts both are provided on the front side. Due to the similarities, the description will focus on the differences as compared to the embodiment of FIG. 5. In particular, the outside module comprises two printed circuit boards 426 and 460. The first printed circuit board 426 generally corresponds to printed circuit boards 26, 126, 226 and 326, described above, as it is insertable at disconnection point 422. By suitable electrical connections 462, e.g. constituted by pins, the printed circuit boards 426 and 460 are connected. The second printed circuit board 460 essentially serves to mount required components which can be accommodated in one or more housings as indicated by 432.

The present invention has now been described with reference to several individual embodiments. The foregoing detailed description has been given for clarity of understanding only, and unnecessary limitations are to be understood or taken from it. All references to right, left, front and rear as well as insertion such directions are exemplary only and do not limit the claimed invention. It will be apparent to those skilled in the art that many changes can be made in the embodiments described without departing from the scope of the invention. Thus, the scope of the present invention should not be limited to the exact details and structures described herein, but rather by the structures described by the language of the claims, and the equivalents of those structures.

## Claims

1. A telecommunications module for a distribution point (10, 310, 410) having:
at least two sides (12, 14);
a first group of contacts (16, 116, 316) adapted to connect with POTS wires;
a second group of contacts (18, 318) adapted to connect with line wires;
a third group of contacts (20, 320) adapted to connect with DSLAM wires,
wherein at least some contacts (16, 316) of the first group are in contact with at least some contacts (18, 318) of the second group at disconnection points (22),
**characterized in, that**
the first group of contacts (16, 316) and the second group of contacts (18, 318) are provided on opposite sides (12, 14) and wherein the first group of contacts (16, 316) is provided on a front side (12) and the second group of contacts (18, 318) is provided on a rear side (14) opposite the front side (12) and wherein the third group of contacts (20, 320) is provided on a front side (12) or a rear side (14).

2. The telecommunications module of claim 1 further having at least one display device (340).

3. The telecommunications module of claim 2 further comprising at least one connector connected with the display device (340).

4. The telecommunications module of one of the preceding claims comprising at least one outside module (24, 124, 224, 324, 424).

5. The telecommunications module of claim 4, wherein the outside module (24, 124, 224, 324, 424) is at least partially insertable into the disconnection points (22) in at least a
first position.

6. The telecommunications module of claim 4 or 5, wherein the outside module is a splitter module (24, 124, 224, 324, 424) having at least one splitter circuit.

7. The telecommunications module of any of claims 4 to 6, wherein the outside module (24, 124, 224) is in contact with the third group of contacts (20) in the first position.

8. The telecommunications module of any of claims 4 to 7, wherein the outside module (124) is at least partially insertable into the telecommunications module in a second position, in which there is no contact with the contacts (20) of the third group.

9. The telecommunications module in accordance with any of claims 4 to 8, wherein the outside module (24, 124, 324, 424) has at least one printed circuit board (26, 126, 326, 426, 460) and electronic components are arranged on both sides of the printed circuit board (226).

10. The telecommunications module in accordance with any of claims 4 to 9, wherein the outside module (424) has two printed circuits (426, 460).

11. The telecommunications module of any of claims 4 to 10, wherein the outside module (24, 124, 224, 324, 424) further has at least one protection component, such as an overcurrent or an overvoltage protector.

12. The telecommunications module of claim 11, wherein the protection components are arranged on a different side of the printed circuit board (226) than the splitter circuit.

13. The telecommunications module in accordance with claim 11 or 12, wherein the protection components are arranged in at least one removable housing (230, 232).

14. The telecommunications module of any of claims 11 to 13 further comprising at least one fail-safe device.

15. The telecommunications module of any of claims 4 to 14, wherein the outside module further has at least one test access contact.

## Patentansprüche

1. Telekommunikationsmodul für einen Verteilungspunkt (10, 310, 410) mit:
mindestens zwei Seiten (12, 14);
einer ersten Gruppe von Kontakten (16, 116, 316), ausgelegt zum Verbinden mit POTS-Drähten (Plain Old Telephone System - einfaches herkömmliches Fernsprechsystem);
einer zweiten Gruppe von Kontakten (18, 318), ausgelegt zum Verbinden mit Leitungsdrähten;
einer dritten Gruppe von Kontakten (20, 320), ausgelegt zum Verbinden mit DSLAM-Drähten (Digital Subscriber Line Access Multiplayer);
wobei mindestens einige Kontakte (16, 316) der ersten Gruppe mit mindestens einigen Kontakten (18, 318) der zweiten Gruppe an Trennstellen (22) in Kontakt stehen,
**dadurch gekennzeichnet, dass**
die erste Gruppe von Kontakten (16, 316) und die zweite Gruppe von Kontakten (18, 318) auf gegenüberliegenden Seiten (12, 14) vorgesehen sind und wobei die erste Gruppe von Kontakten (16, 316) auf einer Frontseite (12) vorgesehen ist und die zweite Gruppe von Kontakten (18, 318) auf einer Rückseite (14) gegenüber der Frontseite (12) vorgesehen ist und wobei die dritte Gruppe von Kontakten (20, 320) auf einer Frontseite (12) oder einer Rückseite (14) vorgesehen ist.

2. Telekommunikationsmodul nach Anspruch 1, weiterhin mit mindestens einer Displayeinrichtung (340).

3. Telekommunikationsmodul nach Anspruch 2, weiterhin umfassend mindestens einen Verbinder, der mit der Displayeinrichtung (340) verbunden ist.

4. Telekommunikationsmodul nach einem der vorhergehenden Ansprüche, umfassend mindestens ein Außenmodul (24, 124, 224, 324, 424).

5. Telekommunikationsmodul nach Anspruch 4, wobei das Außenmodul (24, 124, 224, 324, 424) mindestens teilweise in die Trennstellen (22) in mindestens einer ersten Position eingesetzt werden kann.

6. Telekommunikationsmodul nach Anspruch 4 oder 5, wobei das Außenmodul ein Splittermodul (24, 124, 224, 324, 424) mit mindestens einer Splitterschaltung ist.

7. Telekommunikationsmodul nach einem der Ansprüche 4 bis 6, wobei das Außenmodul (24, 124, 224) mit der dritten Gruppe von Kontakten (20) in der ersten Position in Kontakt steht.

8. Telekommunikationsmodul nach einem der Ansprüche 4 bis 7, wobei das Außenmodul (124) mindestens teilweise in das Telekommunikationsmodul in einer zweiten Position eingesetzt werden kann, in der mit den Kontakten (20) der dritten Gruppe kein Kontakt besteht.

9. Telekommunikationsmodul nach einem der Ansprüche 4 bis 8, wobei das Außenmodul (24, 124, 324, 424) mindestens eine gedruckte Leiterplatte (26, 126, 326, 426, 460) aufweist und Elektronikkomponenten auf beiden Seiten der gedruckten Leiterplatte (226) angeordnet sind.

10. Telekommunikationsmodul nach einem der Ansprüche 4 bis 9, wobei das Außenmodul (424) zwei gedruckte Schaltungen (426, 460) aufweist.

11. Telekommunikationsmodul nach einem der Ansprüche 4 bis 10, wobei das Außenmodul (24, 124, 224, 324, 424) weiterhin mindestens eine Schutzkomponente wie etwa einen Überstrom- oder einen Überspannungsschutz aufweist.

12. Telekommunikationsmodul nach Anspruch 11, wobei die Schutzkomponenten auf eine andere Seite der gedruckten Leiterplatte (226) als die Splitterschaltung angeordnet sind.

13. Telekommunikationsmodul nach Anspruch 11 oder 12, wobei die Schutzkomponenten in mindestens einem entfernbaren Gehäuse (230, 232) angeordnet sind.

14. Telekommunikationsmodul nach einem der Ansprüche 11 bis 13, weiterhin umfassend mindestens eine Fail-Safe-Einrichtung.

15. Telekommunikationsmodul nach einem der Ansprüche 4 bis 14, wobei das Außenmodul weiterhin mindestens einen Prüfzugangskontakt aufweist.

## Revendications

1. Module de télécommunications pour un point de concentration (10, 310, 410) ayant :
au moins deux côtés (12, 14) ;
un premier groupe de contacts (16, 116, 316) adaptés de façon à se connecter avec des fils de service téléphonique ordinaire ;
un deuxième groupe de contacts (18, 318) adaptés de façon à se connecter avec des fils de ligne ;
un troisième groupe de contacts (20, 320) adaptés de façon à se connecter avec des fils de multiplexeur d'accès DSL ;
dans lequel au moins quelques contacts (16, 316) du premier groupe sont en contact avec au moins quelques contacts (18, 318) du deuxième groupe à des points de déconnexion (22),
**caractérisé en ce que**
le premier groupe de contacts (16, 316) et le deuxième groupe de contacts (18, 318) sont prévus sur des côtés opposés (12, 14) et le premier groupe de contacts (16, 316) étant prévu sur un côté avant (12) et le deuxième groupe de contacts (18, 318) étant prévu sur un côté arrière (14) en face du côté avant (12) et le troisième groupe de contacts (20, 320) étant prévu sur un côté avant (12) ou un côté arrière (14).

2. Module de télécommunications selon la revendication 1, ayant en outre au moins un dispositif d'affichage (340).

3. Module de télécommunications selon la revendication 2, comprenant en outre au moins un connecteur connecté avec le dispositif d'affichage (340).

4. Module de télécommunications selon l'une quelconque des revendications précédentes, comprenant au moins un module extérieur (24, 124, 224, 324, 424).

5. Module de télécommunications selon la revendication 4, dans lequel le module extérieur (24, 124, 224, 324, 424) est au moins partiellement insérable dans les points de déconnexion (22) dans au moins une première position.

6. Module de télécommunications selon la revendication 4 ou 5, dans lequel le module extérieur est un splitter module (24, 124, 224, 324, 424) ayant au moins un splitter circuit.

7. Module de télécommunications selon l'une quelconque des revendications 4 à 6, dans lequel le module extérieur (24, 124, 224) est en contact avec le troisième groupe de contacts (20) dans la première position.

8. Module de télécommunications selon l'une quelconque des revendications 4 à 7, dans lequel le module extérieur (124) est au moins partiellement insérable dans le module de télécommunications dans une deuxième position, dans laquelle il n'y a pas de contact avec les contacts (20) du troisième groupe.

9. Module de télécommunications selon l'une quelconque des revendications 4 à 8, dans lequel le module extérieur (24, 124, 324, 424) a au moins une carte de circuit imprimé (26, 126, 326, 426, 460) et des composants électroniques sont disposés sur les deux côtés de la carte de circuit imprimé (226).

10. Module de télécommunications selon l'une quelconque des revendications 4 à 9, dans lequel le module extérieur (424) a deux circuits imprimés (426, 460).

11. Module de télécommunications selon l'une quelconque des revendications 4 à 10, dans lequel le module extérieur (24, 124, 224, 324, 424) a en outre au moins un composant de protection, tel qu'un protecteur contre les surintensités ou contre les surtensions.

12. Module de télécommunications selon la revendication 11, dans lequel les composants de protection sont disposés sur un côté de la carte de circuit imprimé différent (226) de celui où est disposé le splitter circuit.

13. Module de télécommunications selon la revendication 11 ou 12 dans lequel les composants de protection sont disposés dans au moins un boîtier amovible (230, 232).

14. Module de télécommunications selon la revendication 11 ou 13, comprenant en outre au moins un dispositif à sécurité intrinsèque.

15. Module de télécommunications selon l'une quelconque des revendications 4 à 14, dans lequel le module extérieur a en outre au moins un contact d'accès aux essais.
